# FASCICULE DE BREVET EUROPEEN

(11) **EP 1 890 910 B1**
(45) Date de publication et mention de la délivrance du brevet: **12.08.2009**
(21) Numéro de dépôt: 06764736.2
(22) Date de dépôt: 06.06.2006
(51) Int. Cl.: B60P 3/39, A47C 17/80, A47C 17/76

(54) **CADRE DE LIT, LIT COMPORTANT UN TEL CADRE ET PROCEDE POUR MUNIR D'UN TEL LIT UNE VOITURE AUTOMOBILE**
BETTRAHMEN, DIESEN RAHMEN UMFASSENDES BETT UND VERFAHREN ZUM AUSSTATTEN EINES KRAFTFAHRZEUGS MIT DIESEM BETT
BEDFRAME, BED COMPRISING THIS FRAME, AND METHOD FOR FITTING A MOTOR VEHICLE WITH THIS BED

(30) Priorité: 08.06.2005 FR 0505822
(43) Date de publication de la demande: 27.02.2008
(73) Titulaire: Maximilien, Richard, 41200 Romorantin Lanthenay (FR); Legrand, Marc, 41200 Romorantin Lanthenay (FR)
(72) Inventeur: Maximilien, Richard, 41200 Romorantin Lanthenay (FR); Legrand, Marc, 41200 Romorantin Lanthenay (FR)
(74) Mandataire: Lepelletier-Beaufond, François
(86) Numéro de dépôt international: PCT/FR2006/001271
(87) Numéro de publication internationale: WO 2006/131634

(56) Documents cités:
- EP-A- 1 419 955
- DE-A1- 10 014 316
- FR-A- 638 419
- US-A- 2 232 353
- US-A- 4 443 034
- PATENT ABSTRACTS OF JAPAN vol. 1997, no. 10, 31 octobre 1997 (1997-10-31) -& JP 09 142196 A (HINO MOTORS LTD), 3 juin 1997 (1997-06-03)
- PATENT ABSTRACTS OF JAPAN vol. 1998, no. 04, 31 mars 1998 (1998-03-31) -& JP 09 309378 A (KOSHI KAZUYUKI), 2 décembre 1997 (1997-12-02)

## Description

L'invention concerne de manière générale le couchage dans un lit d'appoint.

On connaît déjà des lits d'appoint que l'on déploie pour obtenir un couchage supplémentaire.

On connaît notamment du document US 2,232,353 un cadre de lit comportant un socle et des longerons pivotants.

L'invention vise à permettre à un tel lit d'être rangé de façon particulièrement simple et commode.

A cet effet, l'invention propose un cadre de lit, adapté à accueillir un sommier, comportant :
- un socle ;
- deux longerons ; et
- des moyens de montage à pivotement de chaque dit longeron sur ledit socle de sorte que chaque dit longeron admet une position transversale et une position longitudinale,
**caractérisé en ce que** lesdits deux longerons sont télescopiques et admettent chacun une position rétractée et une position déployée, et en ce que ledit cadre admet une position de rangement dans laquelle lesdits longerons sont, sur ledit socle, chacun en position rétractée et transversale et une position d'utilisation dans laquelle lesdits longerons sont chacun en position déployée et longitudinale, ledit cadre admettant en outre, à l'opposé dudit socle, des moyens de maintien desdits longerons en position déployée et longitudinale.

Ainsi, le cadre de lit que propose l'invention est compact dans sa position de rangement et le sommier, comme le matelas, peuvent être rangés avec ou indépendamment du cadre.

Cela permet d'utiliser le cadre de lit selon l'invention dans les environnements les plus divers, y compris dans une voiture, avec le socle qui est positionné sur la plage arrière.

Dans la position de rangement, le sommier peut alors lui-même être rangé sur le socle tandis que le matelas, par exemple gonflable, est placé dans une autre zone de rangement de l'habitacle.

On observera qu'on connaissait les longerons télescopiques dans diverses utilisations et notamment pour des cadres de lit comme décrit dans FR 638 419.

Selon des caractéristiques de mise en oeuvre particulièrement simples et commodes tant à la fabrication qu'à l'utilisation :
- ledit socle est adapté à être supporté par des premiers éléments prédéterminés d'un habitacle de voiture automobile et lesdits moyens de maintien comportent un organe s'étendant entre lesdits longerons et des deuxièmes éléments prédéterminés dudit habitable ; et éventuellement
- chaque dit longeron comporte, du côté externe, une cale adaptée à venir en contact avec une paroi latérale dudit habitacle d'une voiture automobile ; et/ou
- lesdits moyens de maintien comportent un lien souple adapté à être en prise d'un côté avec l'un desdits longerons et de l'autre côté avec un point d'ancrage dudit habitacle ; et éventuellement
- ledit lien souple est adapté à être en prise dudit autre côté avec un point d'ancrage supérieur de ceinture de sécurité ; et/ou
- chaque dit longeron comporte des moyens de retenue avec lequel ledit lien souple est adapté à être en prise ; et éventuellement
- pour chaque dit longeron, lesdits moyens de retenue comportent une platine fixée audit longeron et présentant un retour, formant un crochet, en débord dudit longeron ; et éventuellement
- chaque dit longeron comportant, du côté externe, une cale adaptée à venir en contact avec une paroi latérale dudit habitacle, ladite platine et ladite cale comportent des moyens de fixation mutuels ; ou
- lesdits moyens de maintien comportent un pied amovible adapté à être fixé à l'un desdits longerons et à prendre appui sur le plancher dudit habitacle ; et/ou
- ledit cadre comporte deux ouvertures positionnées à l'écart l'une de l'autre sur ledit socle ; et/ou
- lesdits moyens de maintien comportent au moins un patin en prise avec un dit longeron, ledit socle et ledit patin étant adaptés à reposer sur le sol ; et éventuellement
- lesdits moyens de maintien comportent au moins un bras s'étendant obliquement d'un dit longeron à ladite traverse ;
- ledit cadre comporte deux dits bras ;
- ledit cadre comporte des moyens de fixation communs dudit patin et dudit bras sur ledit longeron ;
- lesdits moyens de montage à pivotement comportent deux arbres à l'écart l'un de l'autre sur ledit socle, chaque dit arbre recevant une bague appartenant à un dit longeron respectif ; et/ou
- lesdits longerons comportent chacun une glissière faisant face à la glissière de l'autre longeron ; et éventuellement
- une desdites glissières accueille une traverse, ladite traverse étant adaptée à être disposée entre lesdits longerons lorsque ceux-ci sont chacun en position déployée et longitudinale.

L'invention propose également un lit, **caractérisé en ce qu**'il comporte un cadre tel que précédemment exposé et un sommier comportant une pluralité de lattes, ledit lit admettant un état de rangement dans lequel ledit cadre est dans sa position de rangement tandis que lesdites lattes sont rangées sur ledit socle et un état d'utilisation dans lequel ledit cadre est dans sa position d'utilisation tandis que lesdites lattes sont réparties dans lesdites glissières.

Et éventuellement, à l'état d'utilisation dudit lit, lesdites lattes sont disposées couchées dans un plan défini par lesdits longerons et ledit socle tandis qu'à l'état de rangement dudit lit, lesdites lattes sont l'une contre l'autre, disposées debout, sur ledit socle.

Et/ou le lit comporte en outre un matelas adapté à être étendu sur lesdites lattes lorsque ledit cadre est dans sa position d'utilisation.

L'invention propose aussi un procédé pour munir d'un lit une voiture automobile, **caractérisé en ce qu**'il comporte l'étape de se procurer un lit tel que précédemment exposé, l'étape de mettre en place ledit socle sur des premiers éléments prédéterminés de ladite voiture, et :
pour faire passer ledit lit dudit état de rangement audit état d'utilisation :
   - on fait passer chaque dit longeron de sa position rétractée et transversale à sa position déployée et longitudinale ;
   - on relie chaque dit longeron auxdits deuxièmes éléments prédéterminés grâce auxdits moyens de maintien ;
   - on répartit lesdites lattes dans lesdites glissières desdits longerons ; et
pour faire passer ledit lit de l'état d'utilisation à l'état de rangement :
   - on range lesdites lattes, debout, sur ledit socle ;
   - on disjoint lesdits longerons desdits deuxièmes éléments ;
   - on fait passer chaque dit longeron de sa position déployée et longitudinale à sa position rétractée et transversale.

Ainsi, la manoeuvre de rangement du sommier est indépendante de celle du cadre.

Selon des caractéristiques de mise en oeuvre particulièrement simples et commodes :
- le procédé comporte l'étape de mettre en place ledit socle sur une plage arrière de ladite voiture, laquelle plage arrière forme alors lesdits premiers éléments fixes ; et/ ou
- le procédé comporte l'étape d'incliner les sièges que comporte ladite voiture avant de faire passer chaque dit longeron de sa position transversale à sa position longitudinale ; et/ou
- le procédé comporte l'étape de mettre en prise un lien souple avec, d'un côté, des moyens de retenue appartenant à chaque dit longeron et, de l'autre côté, un point d'ancrage de l'habitacle de ladite voiture ; ou
- le procédé comporte l'étape de déployer sur chaque dit longeron un pied amovible prenant appui sur le plancher de l'habitacle de ladite voiture ; et/ou
- le procédé comporte l'étape de disposer une traverse entre lesdits longerons, chacun en position déployée et longitudinale, à l'opposé dudit socle ; et/ou
- le procédé comporte l'étape de mettre en place un matelas sur lesdites lattes, par les ouvrants, ouverts, que comporte ladite voiture.

Les caractéristiques et avantages de l'invention ressortiront de la description qui suit, donnée à titre d'exemple préféré, mais non limitatif, en référence aux dessins annexés, sur lesquels :
- la figure 1 est une vue partiellement en coupe d'une voiture automobile selon l'invention, les sièges étant relevés et le lit étant rangé ;
- la figure 2 est une vue similaire à celle de la figure 1 sur laquelle le lit est déployé, les moyens de maintien étant un lien souple maintenant à un point d'ancrage de ceinture de sécurité le longeron représenté ;
- la figure 3 est une vue en perspective des moyens de maintien de la figure 2 ;
- la figure 4 est une vue similaire à celle de la figure 2 d'une variante du lit représenté sur les figures 1 et 2, les moyens de maintien étant un pied reposant sur le plancher de la voiture ;
- la figure 5 est une vue en perspective des moyens de maintien de la figure 4 ;
- la figure 6 est une vue de dessus du lit représenté sur la figure 1 et sans moyens de maintien dans l'état de rangement ;
- la figure 7 est une vue en perspective du lit de la figure 6 sur laquelle on a représenté partiellement des moyens de fixation dudit socle ;
- la figure 8 est une vue de dessus du lit représenté sur la figure 2 ;
- la figure 9 est une vue en perspective du lit représenté sur la figure 6 ;
- la figure 10 est une vue en perspective du lit de la figure 9 sur laquelle l'un des deux longerons est en position longitudinale et rétractée ;
- la figure 11 est une vue similaire à celle de la figure 10 sur laquelle les deux longerons sont en position longitudinale et rétractée ;
- la figure 12 est une vue agrandie du détail XII de la figure 11 ;
- la figure 13 est une vue similaire à celle de la figure 10 sur laquelle les deux longerons sont en position longitudinale et déployée ;
- la figure 14 est une vue similaire à celle de la figure 13, la traverse étant représentée déployée entre les longerons ;
- la figure 15 est une vue en perspective du lit dans son état d'utilisation, les cales étant fixées sur les longerons ;
- la figure 16 est une vue de dessus d'un lit selon un deuxième mode de réalisation ;
- la figure 17 est une vue en coupe d'un longeron selon un plan repéré par le plan repéré par XVII-XVII sur la figure 16 ;
- la figure 18 est une représentation schématique d'un procédé pour munir une voiture automobile d'un lit selon l'invention.

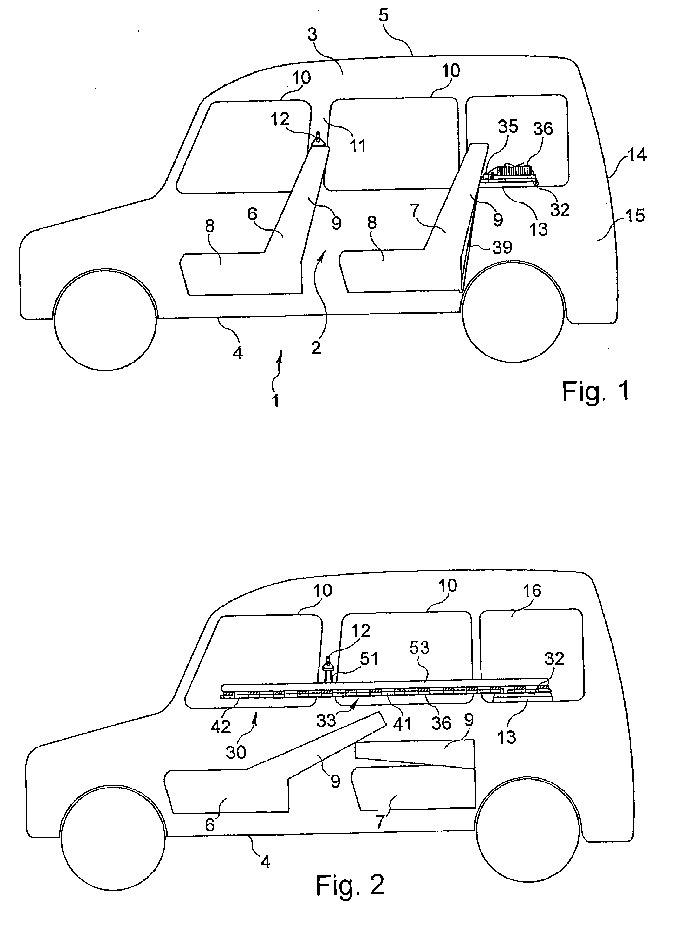

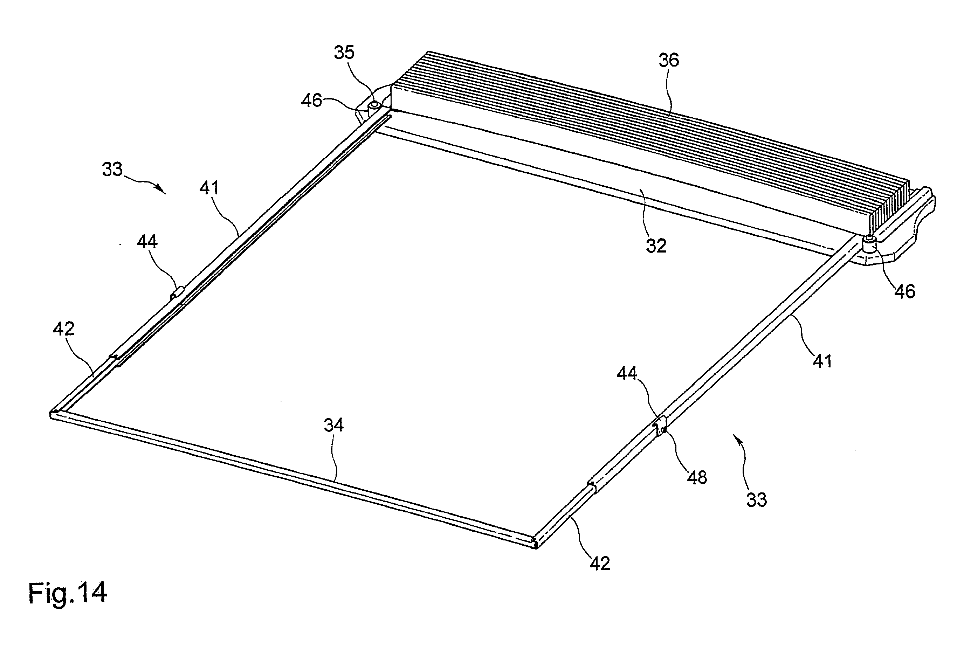

En référence aux figures 1 à 15, la voiture automobile 1 selon l'invention comporte un habitacle 2, délimité par une carrosserie présentant des parois latérales 3, un plancher 4 et un plafond 5.

Dans l'habitacle 2, se trouvent deux sièges avant 6 et deux sièges arrière 7. Chaque siège 6, 7, comporte une zone d'assise 8 sensiblement parallèle au plancher 4 et un dossier 9 sensiblement transversal à la zone d'assise 8.

Les deux parois latérales 3 comportent chacune un montant 11 de chaque côté duquel s'étendent deux portières, situées l'une derrière l'autre et dont on n'a représenté que les fenêtres 10. Le montant 11 est allongé et porte sur sa surface intérieure un point d'ancrage 12 supérieur de ceinture de sécurité.

Derrière les dossiers 9 des sièges arrière 7 s'étend une plage arrière 13. Cette plage arrière 13 est plate et sensiblement rectangulaire, située au niveau du bas des fenêtres. Elle s'étend en longueur entre les deux parois latérales 3 et en largeur à partir de l'arrière des dossiers 9 des sièges arrière 7 jusqu'à mi-distance du hayon 14 que possède la voiture 1. Elle délimite, avec la surface arrière des sièges arrière 9, le plancher 4 et le hayon 14, un coffre 15.

Le hayon 14 comporte une portière dont le montant est horizontal, du côté du toit de la voiture 1. Il comporte des moyens d'ouverture du hayon 14 (non représentés) accessibles depuis l'habitacle 2.

Les parois latérales 3 comportent ici, en outre, deux fenêtres de fond 16 situées au même niveau que les fenêtres 10 et s'étendant entre le dossier 9 d'un siège arrière 7 et le hayon 14.

Les portières, les fenêtres et le hayon forment les ouvrants de la voiture.

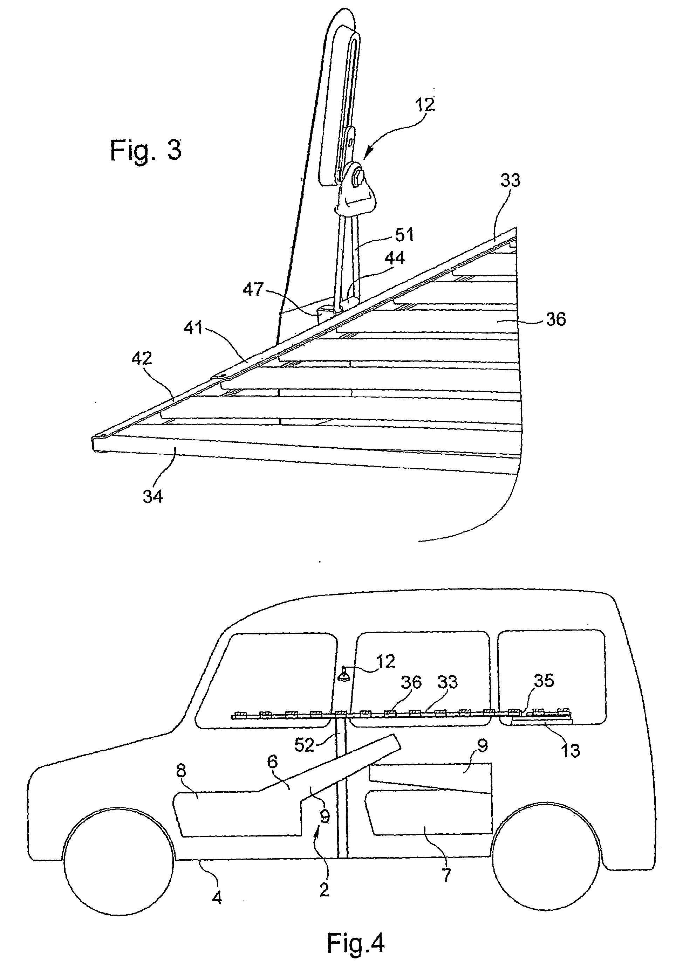

Comme on le voit sur les figures 2 et 4, les sièges avant 6 présentent chacun un dossier 9 qui peut être incliné vers l'arrière tandis que le dossier 9 de chacun des sièges arrière 7 est lui rabattable vers l'avant.

Lorsqu'ils sont respectivement inclinés et rabattus, la hauteur des sièges 6, 7 est significativement diminuée par rapport à la hauteur de ces mêmes sièges 6, 7 en position classique d'utilisation, c'est-à-dire la position telle que représentée sur la figure 1.

La plage arrière 13 comporte ici, pour sa fixation, sur chacun de ses bords latéraux (en regard d'une paroi latérale 3), un doigt de maintien qui coopère avec une rainure réalisée dans une pièce rapportée sur ces dites parois latérales 3. Ces doigts sont situés du côté du siège arrière 7.

La plage arrière 13, et plus particulièrement les parties de la plage arrière 13 à proximité de ses bords au contact des parois latérales 3, repose sur des garnissages en saillie par rapport à la paroi latérale.

La voiture 1 comporte également un lit 30.

Ce lit 30 comporte un cadre pliant 31 présentant un socle 32, deux longerons 33, une traverse 34 et deux arbres 35.

Le lit 30 comporte en outre des lattes 36 coopérant avec le cadre 31. Les lattes 36 forment un sommier pour le lit 30.

Le socle 32 a sensiblement les mêmes dimensions et la même forme que la plage arrière 13. Ce socle 32 a une forme générale rectangulaire.

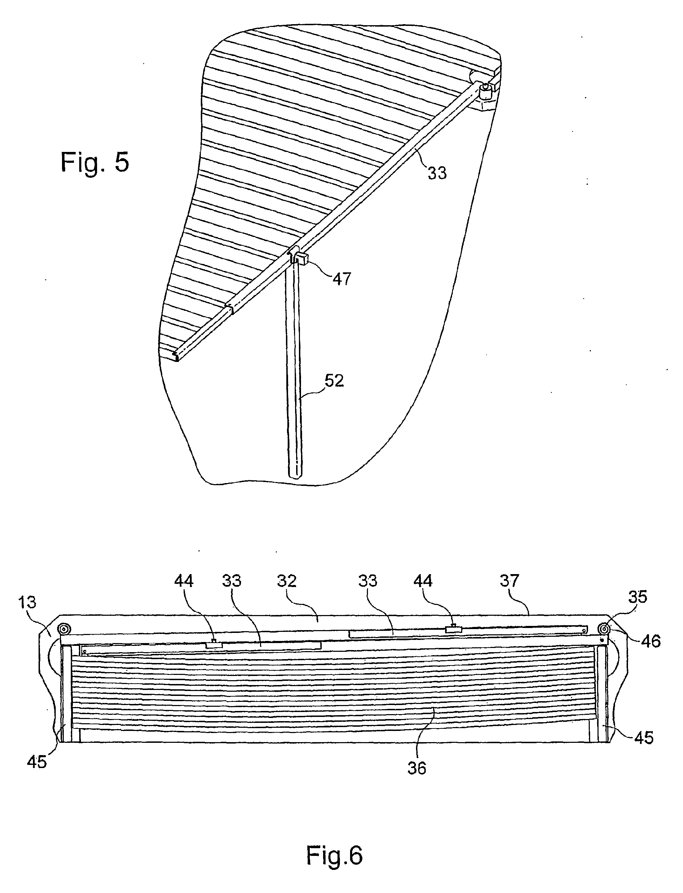

Comme on le voit sur la figure 6, elle présente deux bords principaux, s'étendant selon la longueur du socle 32, parallèles et de même longueur.

Les autres bords du socle 32 présentent une forme permettant audit socle 32 de s'insérer entre deux parois latérales 3. Celui-ci présente sur ces bords un renfoncement peu profond, sensiblement en trapèze. Ces deux renfoncements sont en regard l'un de l'autre et sont ici situés derrière les sièges arrière 7. Ainsi le socle 32, de forme généralement rectangulaire, comporte deux extensions planes vers l'extérieur chacune située vers le bord principal 37 destiné à venir contre les sièges arrière 7.

Les angles du socle 32 sont abattus.

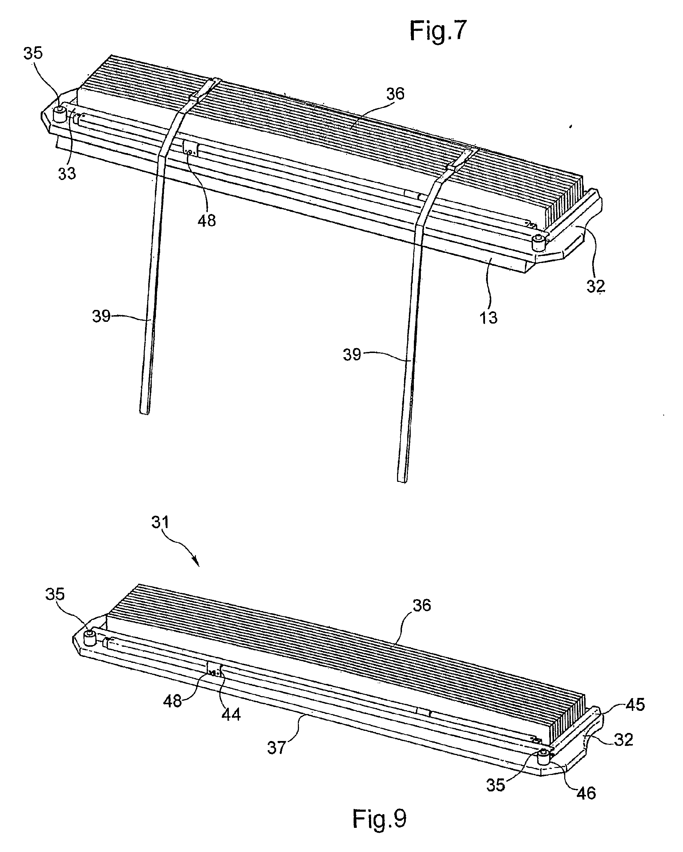

En référence aux figures 1 et 7, le lit 30 est fixé en position de rangement à la plage arrière et au plancher grâce à deux sangles 39.

Les deux sangles 39 sont positionnées à l'écart l'une de l'autre et à l'écart des arbres 35.

Les extrémités des sangles 39 sont ici fixées au plancher 4, par exemple à l'aide d'un mousqueton (non représenté) qui se prend sur une boucle solidaire du plancher 4 sous les sièges 9.

L'autre extrémité de chaque sangle 39 entoure le lit 30 et est maintenue serrée à l'aide d'une boucle autobloquante.

Le socle 32 comporte en outre deux ouvertures circulaires 38 chacune à proximité d'un arbre 35.

Les ouvertures 38 sont adaptées à être positionnées contre les sorties des haut-parleurs (non représentés) présents sur la plage 13. Selon une variante, la voiture 1 comporte des haut-parleurs situés ailleurs dans l'habitacle de la voiture - ou ne comporte aucun haut-parleur - et le socle ne comporte pas d'ouvertures 38.

A proximité de chaque extrémité du bord 37, le socle 32 porte un arbre 35 métallique autour duquel est adapté à pivoter un longeron 33.

Chaque longeron 33 est métallique et comporte un premier tronçon 41 apte à pivoter autour d'un arbre 35 et un deuxième tronçon 43 positionné à l'extrémité opposée à l'arbre 35.

A une extrémité du tronçon 41 de chaque longeron 33, celui-ci est solidarisé avec une bague 46 annulaire prise autour de l'arbre 35. A l'extrémité libre de l'arbre 35, celui-ci présente un diamètre légèrement supérieur au diamètre intérieur de la bague 46 de façon à empêcher le longeron 33 de se désolidariser.

Le premier tronçon 41 est un profilé présentant une section en U de telle sorte qu'il présente une rainure 43 formant glissière.

Il porte, à l'opposé de l'arbre 35, une platine 44 métallique présentant un retour coudé formant un crochet. Cette platine 44 est soudée du côté externe dudit longeron 33.

Du côté externe de la platine 44, celle-ci porte un doigt d'encliquetage 48 coopérant avec des moyens d'encliquetage correspondants que comporte une cale 47.

Le deuxième tronçon 42 est également un profilé présentant une section en U. Les dimensions de la section du deuxième tronçon 42 sont telles que le deuxième tronçon 42 peut coulisser dans la rainure 43 du premier tronçon 41.

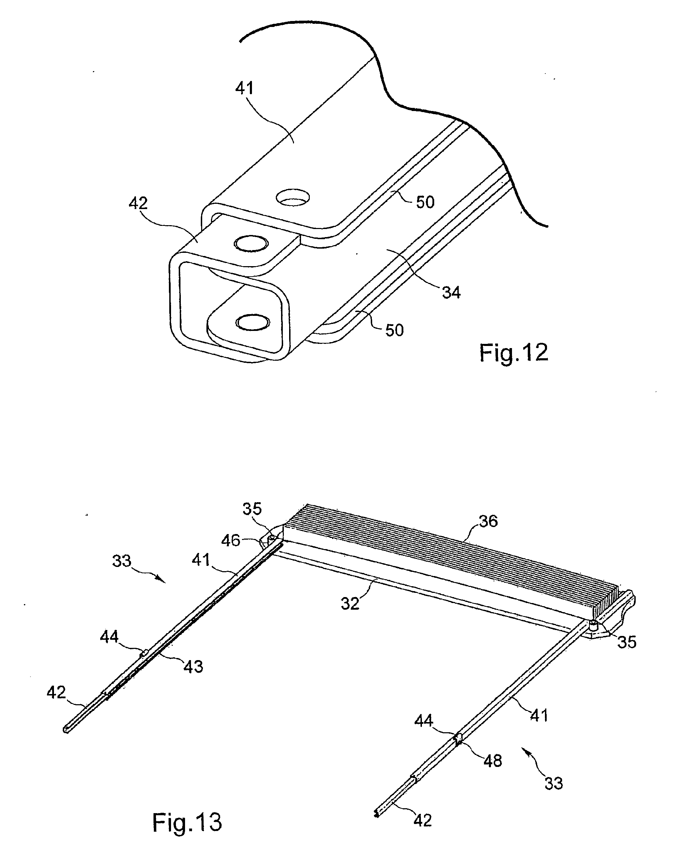

Comme on le voit sur la figure 12, sur la surface intérieure du tronçon 41, celui-ci porte deux bandes 50 en surépaisseur en regard l'une de l'autre de façon à former une coulisse pour le tronçon 42.

L'extrémité du premier tronçon 41 opposée à l'arbre 35 et les extrémités du deuxième tronçon 42 comportent chacune une butée de fin de course de façon à limiter dans les deux directions la course du deuxième tronçon 42 par rapport au premier tronçon 41.

L'un des deux longerons 33 porte également dans la glissière formée dans les deux tronçons 41, 42 la traverse 34 qui est montée à pivotement sur l'extrémité libre du tronçon 42.

La traverse 34 occupe sensiblement toute la longueur du longeron 33 lorsque le tronçon 42 est rentré dans le tronçon 41.

Chaque longeron 33 présente donc une position rétractée dans laquelle le deuxième tronçon 42 est en contact sur toute sa longueur avec une portion du premier tronçon 41 et une position déployée dans laquelle le premier tronçon 41 et le deuxième tronçon 42 ne sont en contact que par l'une de leurs extrémités.

Chaque longeron 33 pivote autour de son arbre 35 et peut prendre une position transversale dans laquelle le longeron 33 repose sur le socle 32 parallèlement aux bords principaux de ce socle 32 ou une position longitudinale dans laquelle le longeron 33 s'étend en saillie du socle 32 transversalement à la position transversale.

Lorsqu'il est dans sa position transversale, le longeron 33 est également dans sa position rétractée. Lorsqu'il est dans sa position longitudinale, le longeron 33 peut être dans sa position rétractée ou dans sa position déployée.

La longueur du longeron 33 en position rétractée est légèrement inférieure à la distance séparant les deux arbres 35.

En position déployée, la rainure du tronçon 42 se situe dans le prolongement de la rainure 43 du tronçon 41 du longeron 33.

En position longitudinale et déployée des longerons 33, la traverse 34 est déployée et fixée à l'extrémité de l'autre longeron 33, ici par un axe goupillé (non représenté).

En position déployée des longerons 33, chacun porte une cale 47. Chaque cale 47 vient en contact d'une paroi latérale 3 de l'habitacle 2.

L'épaisseur des cales 47 est adaptée à permettre que les longerons 33 soient parallèles en position déployée.

A partir des arbres 35 et parallèlement aux bords à proximité des parois latérales 3, s'étendent sur le socle 32 deux supports rigides 45, ici en matériau composite. Les supports 45 sont orientés dans le prolongement des longerons 33 en position déployée.

Chaque support 45 est un profilé présentant une section en L positionné de telle sorte que les branches horizontales respectives pointent l'une vers l'autre.

Le sommier du lit 30 selon l'invention est formé par une série de lattes 36 de bois qui sont des plaquettes allongées et peu épaisses. Leur longueur correspond à la distance séparant les deux supports 45.

Le sommier comporte ici quatorze lattes 36. Comme on le voit sur la figure 6, dans la position de rangement du cadre 31, toutes les lattes 36 sont disposées debout, l'une contre l'autre et reposant sur le socle 32.

La largeur occupée par cette série de lattes 36 est ici légèrement inférieure à la longueur des supports 45.

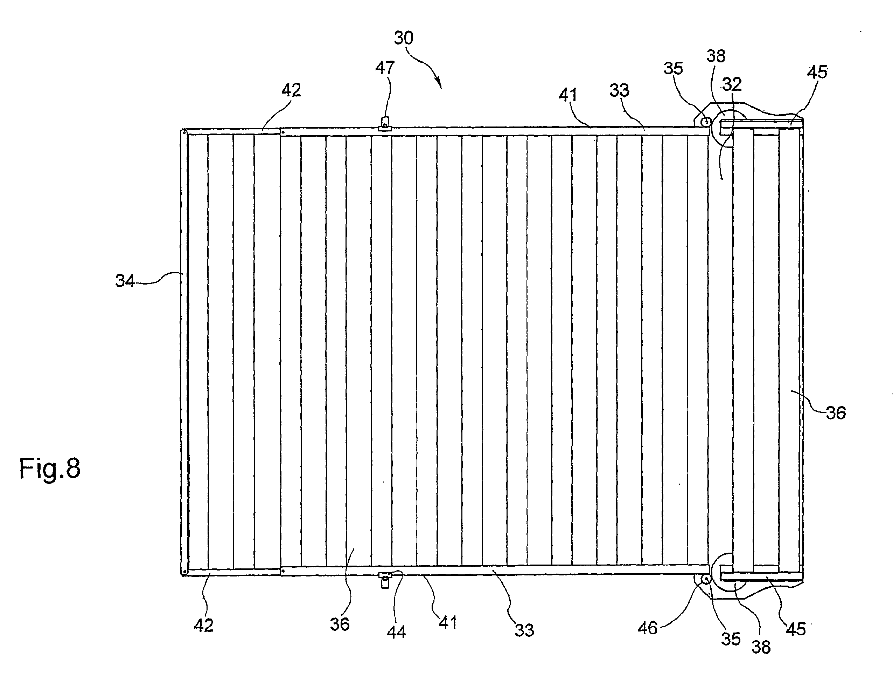

Lorsque le cadre 31 est en position d'utilisation, comme on le voit à la figure 8, les lattes 36 sont réparties. Elles sont légèrement bombées vers le plafond de l'habitacle 2. Deux lattes 36 sont soutenues par les supports 45, et plus précisément par les branches horizontales de ces supports 45. Les autres lattes 36 sont réparties entre les deux longerons 33 et sont maintenues par ceux-ci grâce aux rainures 43 ainsi qu'aux rainures des deuxièmes tronçons 42 des longerons 33.

Comme on le voit sur les figures 2 et 3, le lit 30 est maintenu non seulement par la plage arrière, mais également par deux liens souples 51, tels qu'une corde.

Chaque corde 51 forme une boucle fermée. La boucle est prise dans le retour coudé 44 et sur le point d'ancrage 12. Du côté du point d'ancrage 12, la corde 51 passe derrière l'étrier triangulaire dans lequel passe la ceinture (non représentée), au dessus de la vis de serrage de cet étrier.

Selon une variante de réalisation représentée sur la figure 5, le lit 30 ne comporte pas de liens souples 51 permettant d'accrocher les longerons 33 à un point d'ancrage 12 mais deux pieds 52 permettant aux longerons 33, et donc au lit 30, de prendre appui directement sur le plancher 4 de la voiture 1. Chaque pied 52 est ici monté sur un longeron 33 au niveau de la platine 44 sur le doigt d'encliquetage 48 coopérant avec des moyens d'encliquetage correspondants que comporte le pied 52.

Selon une variante, en l'absence de platine 44, des moyens de fixation mutuels sont prévus sur le pied et sur le longeron.

Du côté extérieur, le pied comporte un autre doigt d'encliquetage pour la coopération avec la cale 47.

Comme on le voit sur la figure 2, le lit 30 comporte également un matelas 53 de dimensions sensiblement équivalentes à celles du cadre 31 déployé. Le matelas 53 est un matelas gonflable et gonflé lorsqu'il est positionné sur les lattes 36. Selon des variantes du mode de réalisation, on utilise un matelas en mousse ou encore plusieurs matelas.

On décrit maintenant, en référence aux figures 9 à 15 et 18, la mise en place d'un lit 30 selon l'invention.

Lorsque le lit n'est pas utilisé (figure 9), le cadre 31 est en position de rangement et les lattes 36 sont positionnées debout sur le socle 32 les unes contre les autres. L'ensemble des pièces du lit est par exemple rangé dans une housse.

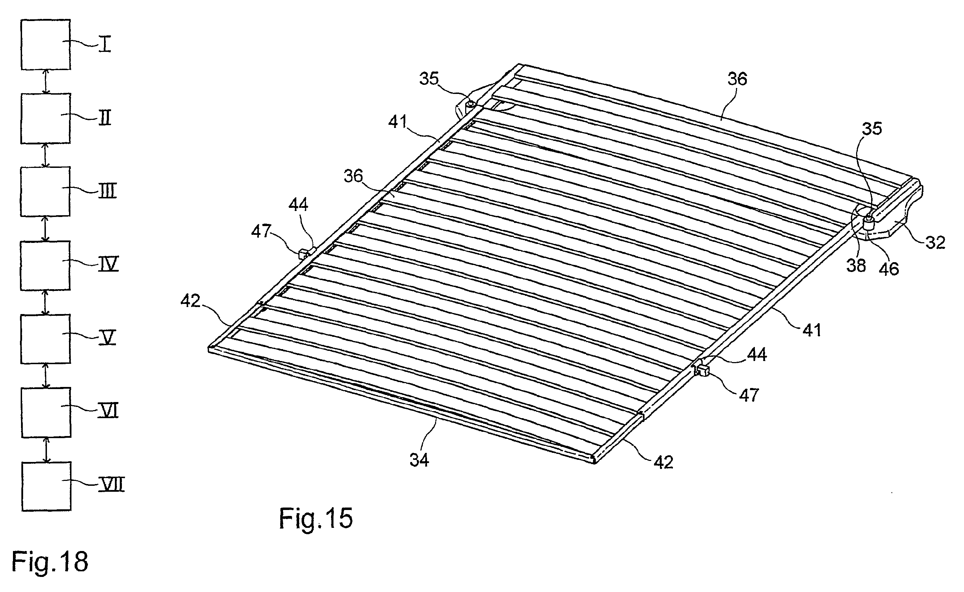

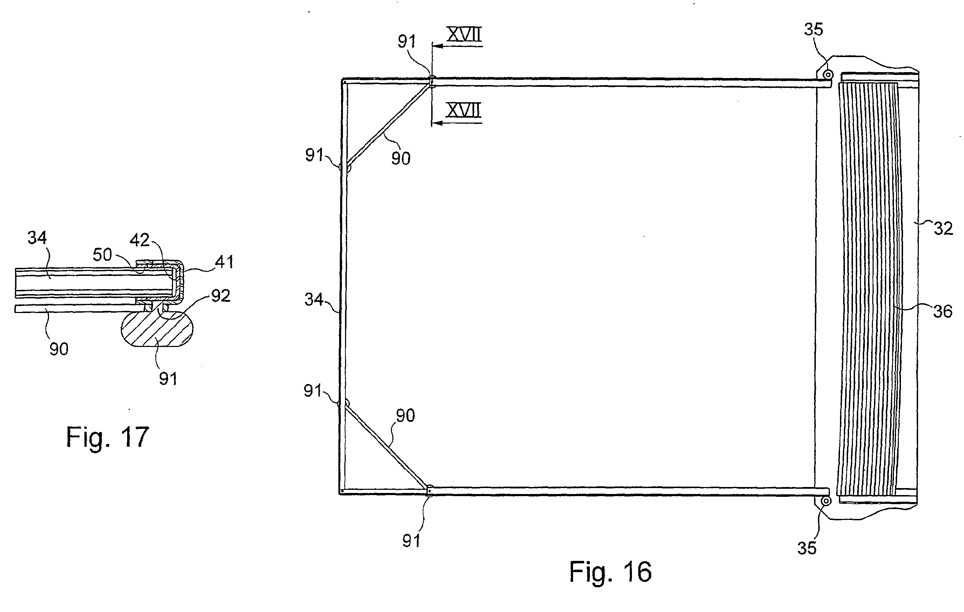

Une fois que l'on s'est procuré ce lit (étape I, figure 18), on positionne le socle 32 sur la plage arrière 13 et on les fixe l'un à l'autre et à la carrosserie au moyen de sangles 39 (étape II, figure 16) et la voiture peut être utilisée normalement.

Selon une variante, l'ensemble des lattes est rangé dans le coffre de la voiture indépendamment du socle.

Lorsqu'on souhaite utiliser le lit, on défait les sangles, on rabat les dossiers 9 des sièges arrière 7, puis on incline les dossiers 9 des sièges avant 6 sur les sièges arrière 7 (étape III, figure 18).

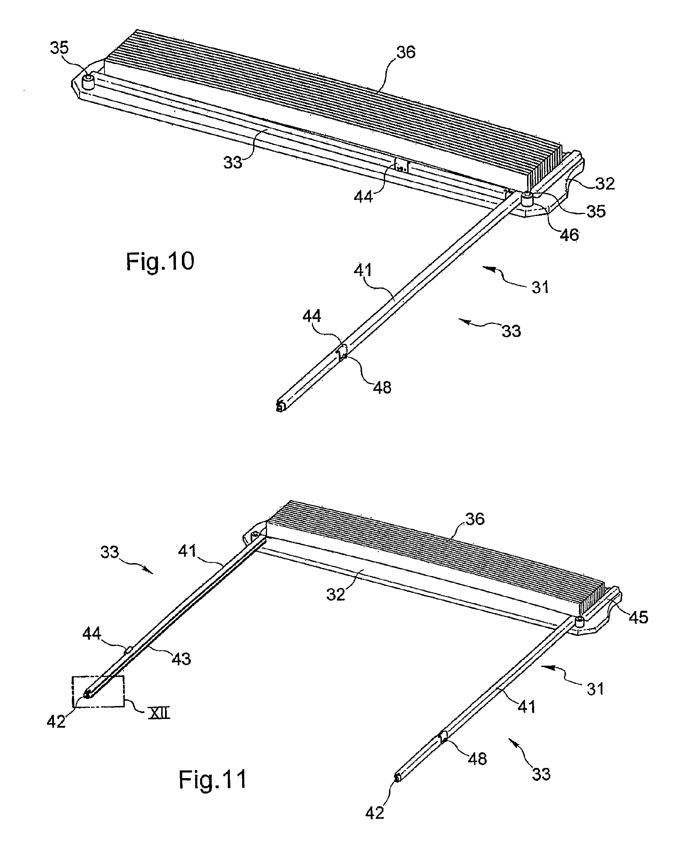

On fait passer un premier longeron 33 de sa position transversale à sa position longitudinale (figure 10), puis le deuxième longeron 33 de sa position transversale à sa position longitudinale (figure 11).

On encliquette les cales 47.

On fait passer les cordes dans le retour de chaque platine 44 des longerons 33 et derrière les étriers des points d'ancrage 12 (étape IV).

En variante, une fois les longerons déployés, on fixe les pieds 52 sur les longerons 33 pour que le cadre puisse prendre appui sur le plancher 4.

On fait ensuite passer les longerons 33 de leur position rétractée à leur position déployée en faisant coulisser les tronçons 42 dans les tronçons 41 (figure 13, étape V).

On déploie la traverse 34 (étape VI).

On répartit ensuite les lattes 36 sur toute la longueur du cadre 31 ainsi formé (figure 15, étape VII).

Pour compléter le lit 30, on positionne ensuite le matelas 53 au-dessus des lattes 36 (étape VIII) en faisant passer par un ouvrant de la voiture, ici le hayon 14.

Une fois le lit 30 complètement déployé, on peut y accéder grâce à l'ouverture du hayon 14.

Pour faire passer le lit 30 de l'état d'utilisation à l'état de rangement, on effectue les étapes inverses (représentées schématiquement sur la même figure 10 par les étapes VIII à III), à savoir :
- on retire le matelas 53 (étape VIII) ;
- on place les lattes 36 debout sur le socle 32 (étape VII) ;
- on range la traverse 34 dans le longeron 33 (étape VI) ;
- on passe les longerons 33 de leur position longitudinale et déployée à leur position transversale et rétractée (étape IV) ;
- on décroche les cordes 51 des points d'ancrage 12 (en variante, on démonte les pieds 52) (étape V) ;
- on relève les sièges 6, 7 (étape III).
   En référence aux figures 16 et 17 on décrit maintenant un deuxième mode de réalisation du lit selon l'invention.

Ce lit comporte également un cadre pliant 31, un socle 32, deux longerons 33, une traverse 34, deux arbres 35 et une pluralité de lattes 36.

Ces différents éléments sont similaires à ceux décrits pour le lit 30 pour habitacle de voiture.

Le lit comporte également deux bras 90 et quatre patins 91.

Une première extrémité de chaque bras 90 est articulée à l'extrémité d'un tronçon 41 opposée au socle 32.

Lorsqu'ils sont rangés, les bras 90 s'étendent chacun sous un tronçon 41. Lorsque le cadre 31 est dans sa position d'utilisation, la deuxième extrémité de chaque bras 90 est fixée sous la traverse 34 à l'aide de moyens de fixation adaptés (non représentés).

Dans cette position, les bras 90 bloquent tout mouvement de chaque longeron 33 au tour de leur arbre 35 respectif.

Comme on le voit sur la figure 17, à chaque extrémité des bras 90, se trouve un patin 91 formant moyens de maintien des longerons 33 sur le sol sur lequel le lit 30 est déployé.

La hauteur de chaque patin 91 correspond à celle du socle 32.

Chaque patin 91 comporte un plot 92 formant un arbre pour un bras 90, le bras 90 présentant un alésage traversé par le plot 92.

L'extrémité supérieure du plot 92 vient remplir un alésage que comporte la paroi inférieure du tronçon 41 et est arrêtée par le tronçon 42 à l'intérieur du tronçon 41.

La traverse 34 comporte également des alésages destinés aux plots 92 placés sous la deuxième extrémité des bras 90.

Le lit 30 s'installe de la même façon que celui décrit dans le mode de réalisation précédent à la différence des moyens de maintien qui sont ici remplacés par les patins 91.

Une fois le lit 30 dans sa position telle que représentée sur la figure 16, on répartit les lattes dans les glissières tel que précédemment.

En position de rangement du cadre 32, les bras 90 et les patins 91 sont dissociés des longerons 33 et sont installés une fois que ceux-ci sont en position déployée et longitudinale.

On n'a pas décrit en détail le passage de longerons de leur position rétractée transversale à leur position déployée longitudinale qui est le même que dans le mode de réalisation précédent.

Selon une variante de ce mode de réalisation, les bras 90 sont plus long.

Selon une autre variante, d'autres moyens sont prévus à la place des bras 90 pour bloquer le mouvement en rotation des longerons 33.

Selon une autre variante des moyens de fixation supplémentaires sont prévus pour fixer ensemble les patins, les bras et les longerons ou la traverse.

Selon encore une autre variante, les bras sont fixés aux longerons d'une façon permanente et autorisant une rotation et ils sont repliés sous les longerons en position de rangement du cadre. Des patins sont ajoutés en position longitudinale des bras.

Selon des variantes du mode de réalisation du lit pour voiture :
- à l'arrière, la voiture comporte des ouvrants de type porte avec des montants latéraux verticaux, ou un hayon à deux battants, l'un s'ouvrant vers le haut et l'autre vers le bas ; et/ou
- les sièges avant et arrière s'inclinent et se rabattent selon d'autres dispositions ; et/ou
- les longerons et les lattes sont en matière plastique ; et/ou
- le nombre de lattes est différent ; et/ou
- le crochet dans lequel se prend la corde est un anneau et la corde reste solidaire des longerons dans leur position de rangement ou d'utilisation ; et/ou
- les lattes sont reliées les unes aux autres par une bande souple de tissu agrafée à chaque latte ; et/ou
- la voiture ne comporte pas de plage arrière mais comporte des éléments saillants de la paroi latérale de type garnissage de sorte que le socle est positionné directement sur ces éléments saillants. Des moyens de fixation ou d'encliquetage sont également possibles entre le socle et les éléments saillants ; ou
- le socle est posé directement sur les sièges arrières inclinés ; et/ou
- les liens souples viennent s'accrocher sur un point d'ancrage tel qu'un crochet prévu sur le montant de la paroi latérale ; et/ou
- le pied est monté pivotant sur le longeron et reste fixé sur celui-ci même quand le longeron est en position rétractée et transversale ; et/ou
- les cales sont inamovibles des longerons ; et/ou
- les étapes de mise en place sont effectuées dans un ordre différent. Selon un autre mode de réalisation, le cadre de lit comporte un sommier formé sans lattes, par exemple à l'aide d'un filet ou encore d'un volet enroulé sous le socle de support et que l'on déploie le long des rainures des deux longerons jusqu'à ce qu'il occupe l'ensemble de l'espace délimité par les longerons, la traverse et le socle de support.

Selon un autre mode de réalisation, le cadre de lit comporte des patins et des moyens de retenue d'un lien souple ou des patins et des pieds amovibles de sorte que le lit peut être utilisé sur le sol ou maintenu à l'écart du plancher dans une voiture.

## Revendications

1. Cadre de lit, adapté à accueillir un sommier, comportant :
- un socle (32) ;
- deux longerons (33) ; et
- des moyens de montage (35, 46) à pivotement de chaque dit longeron (33) sur ledit socle (32) de sorte que chaque dit longeron (33) admet une position transversale et une position longitudinale,
**caractérisé en ce que** lesdits deux longerons (33) sont télescopiques et admettent chacun une position rétractée et une positon déployée, et **en ce que** ledit cadre (31) admet une position de rangement dans laquelle lesdits longerons (33) sont, sur ledit socle (32), chacun en position rétractée et transversale et une position d'utilisation dans laquelle lesdits longerons (33) sont chacun en position déployée et longitudinale, ledit cadre admettant en outre, à l'opposé dudit socle, des moyens de maintien (51, 52, 90, 91) desdits longerons (33) en position déployée et longitudinale.

2. Cadre de lit selon la revendication 1, **caractérisé en ce que** ledit socle (32) est adapté à être supporté par des premiers éléments (13) prédéterminés d'un habitacle (2) de voiture automobile et **en ce que** lesdits moyens de maintien (51, 52) comportent un organe s'étendant entre lesdits longerons (33) et des deuxièmes éléments (12, 4) prédéterminés dudit habitacle (2).

3. Cadre selon la revendication 2, **caractérisé en ce que** chaque dit longeron (33) comporte, du côté externe, une cale (47) adaptée à venir en contact avec une paroi latérale (3) dudit habitacle (2).

4. Cadre selon l'une quelconque des revendications 2 ou 3, **caractérisé en ce que** lesdits moyens de maintien comportent un lien souple (51) adapté à être en prise d'un côté avec l'un desdits longerons (33) et de l'autre côté avec un point d'ancrage (12) dudit habitacle (2).

5. Cadre selon la revendication 4, **caractérisé en ce que** ledit lien souple (51) est adapté à être en prise dudit autre côté avec un point d'ancrage (12) supérieur de ceinture de sécurité.

6. Cadre selon l'une quelconques des revendications 4 ou 5, **caractérisé en ce que** chaque dit longeron (33) comporte des moyens de retenue avec lequel ledit lien souple (51) est adapté à être en prise.

7. Cadre selon la revendication 6, **caractérisé en ce que**, pour chaque dit longeron (33), lesdits moyens de retenue comportent une platine (44) fixée audit longeron (33) et présentant un retour, formant un crochet, en débord dudit longeron (33).

8. Cadre selon la revendication 7, **caractérisé en ce que**, chaque dit longeron (33) comportant, du côté externe, une cale (47) adaptée à venir en contact avec une paroi latérale (3) dudit habitacle (2), ladite platine (44) et ladite cale (47) comportent des moyens de fixation mutuels (48).

9. Cadre selon l'une quelconque des revendications 2 ou 3, **caractérisé en ce que** lesdits moyens de maintien comportent un pied amovible (52) adapté à être fixé à l'un desdits longerons (33) et à prendre appui sur le plancher (4) dudit habitacle (2).

10. Cadre selon l'une quelconque des revendications 2 à 9, **caractérisé en ce qu'**il comporte deux ouvertures (38) positionnées à l'écart l'une de l'autre sur ledit socle (32).

11. Cadre selon l'une quelconque des revendications 1 à 10, **caractérisé en ce que** lesdits moyens de maintien comportent au moins un patin (91) en prise avec un dit longeron (33), ledit socle (32) et ledit patin (91) étant adaptés à reposer sur le sol.

12. Cadre selon la revendication 11, **caractérisé en ce que** lesdits moyens de maintien comportent au moins un bras (90) s'étendant obliquement d'un dit longeron (33) à ladite traverse (34).

13. Cadre selon la revendication 12, **caractérisé en ce qu'**il comporte deux dits bras (90).

14. Cadre selon la revendication 13, **caractérisé en ce qu'**il comporte des moyens de fixation communs (92) dudit patin (91) et dudit bras (90) sur ledit longeron (33).

15. Cadre selon l'une quelconque des revendications précédentes, **caractérisé en ce que** lesdits moyens de montage à pivotement comportent deux arbres (35) à l'écart l'un de l'autre sur ledit socle (32), chaque dit arbre recevant une bague (46) appartenant à un dit longeron (33) respectif.

16. Cadre selon l'une quelconque des revendications précédentes, **caractérisé en ce que** lesdits longerons (33) comportent chacun une glissière (43) faisant face à la glissière (43) de l'autre longeron (33).

17. Cadre selon la revendication 16, **caractérisé en ce que** une desdites glissières (43) accueille une traverse (34), ladite traverse (34) étant adaptée à être disposée entre lesdits longerons (33) lorsque ceux-ci sont chacun en position déployée et longitudinale.

18. Lit **caractérisé en ce qu'**il comporte un cadre (31) selon l'une quelconque des revendications 16 ou 17 et un sommier comportant une pluralité de lattes (36), ledit lit (30) admettant un état de rangement dans lequel ledit cadre (31) est dans sa position de rangement tandis que lesdites lattes (36) sont rangées sur ledit socle (32) et un état d'utilisation dans lequel ledit cadre (31) est dans sa position d'utilisation tandis que lesdites lattes (36) sont réparties dans lesdites glissières (43).

19. Lit selon la revendication 18, **caractérisé en ce que**, à l'état d'utilisation dudit lit (30), lesdites lattes (36) sont disposées couchées dans un plan défini par lesdits longerons (33) et ledit socle (32) tandis qu'à l'état de rangement dudit lit (30), lesdites lattes (36) sont l'une contre l'autre, disposées debout, sur ledit socle (32).

20. Lit selon l'une quelconque des revendications 18 ou 19, **caractérisé en ce qu'**il comporte en outre un matelas (53) adapté à être étendu sur lesdites lattes (36) lorsque ledit cadre (31) est dans sa position d'utilisation.

21. Procédé pour munir d'un lit une voiture automobile, **caractérisé en ce qu'**il comporte l'étape de se procurer un lit (30) selon l'une quelconque des revendications 18 à 20, l'étape de mettre en place ledit socle (32) sur des premiers éléments prédéterminés (13) de ladite voiture (1), et :
pour faire passer ledit lit (30) dudit état de rangement audit état d'utilisation :
- on fait passer chaque dit longeron (33) de sa position rétractée et transversale à sa position déployée et longitudinale ;
- on relie chaque dit longeron auxdits deuxièmes éléments prédéterminés (12, 4) de ladite voiture (1) grâce auxdits moyens de maintien (51, 52) ;
- on répartit lesdites lattes (36) dans lesdites glissières (43) desdits longerons (33) ; et
pour faire passer ledit lit (30) de l'état d'utilisation à l'état de rangement :
- on range lesdites lattes (36), debout, sur ledit socle (32),
- on disjoint lesdits longerons (33) desdits deuxièmes éléments (12, 4) ;
- on fait passer chaque dit longeron (33) de sa position déployée et longitudinale à sa position rétractée et transversale.

22. Procédé selon la revendication 21, **caractérisé en ce qu'**il comporte l'étape de mettre en place ledit socle (32) sur une plage arrière (13) de ladite voiture (1), laquelle plage arrière (13) forme alors lesdits premiers éléments fixes.

23. Procédé selon l'une des revendications 21 ou 22, **caractérisé en ce qu'**il comporte l'étape d'incliner les sièges (6, 7) que comporte ladite voiture (1) avant de faire passer chaque dit longeron (33) de sa position transversale à sa position longitudinale.

24. Procédé selon l'une quelconque des revendications 21 à 23, **caractérisé en ce qu'**il comporte l'étape de mettre en prise un lien souple (51) avec, d'un côté, des moyens de retenue appartenant à chaque dit longeron (33) et, de l'autre côté, un point d'ancrage (12) de l'habitacle (2) de ladite voiture (1).

25. Procédé selon l'une quelconque des revendications 21 à 23, **caractérisé en ce qu'**il comporte l'étape de déployer sur chaque dit longeron (33) un pied amovible (52) prenant appui sur le plancher de l'habitacle (2) de ladite voiture (1).

26. Procédé selon l'une quelconque des revendications 21 à 25, **caractérisé en ce qu'**il comporte l'étape de disposer une traverse (34) entre lesdits longerons (33), chacun en position déployée et longitudinale, à l'opposé dudit socle (32).

27. Procédé selon l'une quelconque des revendications 21 à 26, **caractérisé en ce qu'**il comporte l'étape de mettre en place un matelas (53) sur lesdites lattes (36), par les ouvrants (14), ouverts, que comporte ladite voiture (1).

## Claims

1. Bedframe, adapted to accommodate a mattress support, including:
- a base (32),
- two side rails (33); and
- means (35, 46) for pivotal mounting of each of said side rails (33) on said base (32) so that each of said side rails (33) can assume a transverse position and a longitudinal position, **characterized in that** said two side rails (33) are telescopic and each have a retracted position and a deployed position, and **in that** said frame (31) has a stowed position in which said rails (33) are each in a retracted and transverse position on said base (32) and a position of use in which said side rails (33) are each in a deployed and longitudinal position, said frame also having on the side opposite said base, means (51, 52, 90, 91) for retaining said side rails (33) in the deployed and longitudinal position.

2. Bedframe according to claim 1, **characterised in that** said base (32) is adapted to be supported by first predetermined elements (31) of a motor vehicle passenger compartment (2) and said retaining means (51, 52) include a member extending between said side rails (33) and predetermined second elements (12, 4) of said passenger compartment (2).

3. Frame according to claim 2, **characterised in that** each of said side rails (33) includes, on the outside, a spacer (47) adapted to come into contact with a lateral wall (3) of said passenger compartment (2).

4. Frame according to either of claims 2 or 3, **characterised in that** said retaining means include a flexible tie (51) adapted to be engaged at one end with one of said side rails (33) and at the other end with an anchor point (12) of said passenger compartment (2).

5. Frame according to claim 4, **characterised in that** said flexible tie (51) is adapted to be engaged at the other end with an upper safety belt anchor point (12).

6. Frame according to either of claims 4 or 5, **characterised in that** each of said side rails (33) include retaining means with which said flexible tie (51) is adapted to interengage.

7. Frame according to claim 6, **characterised in that,** for each of said side rails (33), said retaining means include a plate (44) fixed to said side rail (33) and having a return, forming a hook, projecting from said side rail (33).

8. Frame according to claim 7, **characterised in that,** each of said side rails (33) including, on the outside, a spacer (47) adapted to come into contact with a lateral wall (3) of said passenger compartment (2), said plate (44) and said spacer (47) include mutual fixing means (48).

9. Frame according to either of claims 2 or 3, **characterised in that** said retaining means include a removable leg (52) adapted to be fixed to one of said side rails (33) and to bear on the floor (4) of said passenger compartment (2).

10. Frame according to any one of claims 2 to 9, **characterised in that** it includes two openings (38) disposed at a distance from each other on said base (32).

11. Frame according to any one of claims 1 to 10, **characterised in that** said retaining means include at least one foot (91) engaged with one of said side rails (33), said base (32) and said foot (91) being adapted to rest on the floor.

12. Frame according to claim 11, **characterised in that** said retaining means include at least one arm (90) extending obliquely from one of said side rails (33) to said crossmember (34).

13. Frame according to claim 12, **characterised in that** it includes two of said arms (90).

14. Frame according to claim 13, **characterised in that** it includes common means (92) for fixing said foot (91) and said arm (90) to said side rail (33).

15. Frame according to any one of the preceding claims, **characterised in that** said pivotal mounting means include two shafts (35) spaced from each other on said base (32), each of said shafts receiving a ring (46) belonging to a respective one of said side rails (33).

16. Frame according to any one of the preceding claims, **characterised in that** said side rails (33) each include a slideway (43) facing the slideway (43) of the other side rail (33).

17. Frame according to claim 16, **characterised in that** one of said slideways (43) accommodates a crossmember (34), said crossmember (34) being adapted to be disposed between said side rails (33) when each of them is in a deployed and longitudinal position.

18. Bed **characterised in that** it includes a frame (31) according to either of claims 16 or 17 and a mattress support including a plurality of slats (36), said bed (30) assuming a stowed state in which said frame (31) is in its stowed position and said slats (36) are stowed on said base (32), and a state of use in which said frame (31) is in its position of use while said slats (36) are spread out in said slides (43).

19. Bed according to claim 18, **characterised in that,** in the state of use of said bed (30), said slats (36) are disposed lying down in a plane defined by said side rail (33) and said base (32) while in the stowed state of said bed (30) said slats (36) are one against the other, disposed upright, on said base (32).

20. Bed according to either of claims 18 or 19,
**characterised in that** it further includes a mattress (53) adapted to be spread out on said slats (36) when said frame (31) is in its position of use.

21. Method for providing a motor vehicle with a bed, **characterised in that** it includes the step of procuring a bed (30) according to any one of claims 18 to 20, the step of placing said base (32) on predetermined first elements (13) of said vehicle (1), and:
to change said bed (30) from said stowed state to said state of use:
- each of said side rails (33) is moved from its retracted and transverse position to its deployed and longitudinal position;
- each of said side rails is connected to said second predetermined elements (12, 4) of said vehicle (1) by said retaining means (51, 52);
- said slats (36) are spread out in said slideways (43) of said side rails (33); and
to change said bed (30) from the state of use to the stowed state:
- said slats (36) are stowed upright on said base (32),
- said side rails (33) are separated from said second elements (12, 4);
- each of said side rails (33) is moved from its deployed and longitudinal position to its retracted and transverse position.

22. Method according to claim 21, **characterised in that** it includes the step of placing said base (32) on a rear parcel shelf (13) of said vehicle (1), said rear parcel shelf (13) then forming said first fixed elements.

23. Method according to either of claims 21 or 22, **characterised in that** it includes the step of inclining the seats (6, 7) of said vehicle (1) before moving each of said side rails (33) from its transverse position to its longitudinal position.

24. Method according to any one of claims 21 to 23, **characterised in that** it includes the step of engaging a flexible tie with, on the one hand, retaining means appropriate to each of said side rails (33) and, on the other hand, an anchor point (12) of the passenger compartment (2) of said vehicle (1).

25. Method according to any one of claims 21 to 23, **characterised in that** it includes the step of deploying on each of said side rails (33) a removable foot (52) bearing on the floor of the passenger compartment (2) of said vehicle (1).

26. Method according to any one of claims 21 to 25, **characterised in that** it includes the step of disposing a crossmember (34) between said side rails (33), each in a deployed and longitudinal position, opposite said base (32).

27. Method according to any one of claims 21 to 26, **characterised in that** it includes the step of placing a mattress (53) on said slats (36) through opening panels (14) of said vehicle (1).

## Patentansprüche

1. Bettgestell, das geeignet ist, einen Bettrost aufzunehmen, und Folgendes umfasst:
- einen Sockel (32),
- zwei Längsträger (33) und
- Montagemittel (35, 46) zum Schwenken jedes Längsträgers (33) auf dem Sockel (32), so dass jeder Längsträger (33) eine Querposition und eine Längsposition einnehmen kann,
**dadurch gekennzeichnet, dass** die beiden Längsträger (33) ausziehbar sind und jeweils eine eingezogene Position und eine ausgefahrene Position einnehmen können und dass das Gestell (31) eine Verstauposition, in der die Längsträger (33) auf dem Sockel (32) jeweils in der eingezogenen Querposition sind, und eine Gebrauchsposition, in der die Längsträger (33) jeweils in der ausgefahrenen Längsposition sind, einnehmen kann, wobei das Gestell ferner gegenüber dem Sockel Mittel (51, 52, 90, 91) zum Halten der Längsträger (33) in der ausgefahrenen Längsposition aufweist.

2. Bettgestell nach Anspruch 1, **dadurch gekennzeichnet, dass** der Sockel (32) geeignet ist, von vorbestimmten ersten Elementen (13) einer Kraftfahrzeugfahrgastzelle (2) gestützt zu werden, und dass die Haltemittel (51, 52) ein Glied umfassen, das sich zwischen den Längsträgern (33) und den beiden vorbestimmten Elementen (12, 4) der Fahrgastzelle (2) erstreckt.

3. Gestell nach Anspruch 2, **dadurch gekennzeichnet, dass** jeder Längsträger (33) auf der Außenseite einen Keil (47) umfasst, der geeignet ist, mit einer Seitenwand (3) der Fahrgastzelle (2) in Kontakt zu kommen.

4. Gestell nach Anspruch 2 oder 3, **dadurch gekennzeichnet, dass** die Haltemittel eine flexible Verbindung (51) umfassen, die geeignet ist, auf einer Seite mit einem der Längsträger (33) und auf der anderen Seite mit einem Verankerungspunkt (12) der Fahrgastzelle (2) in Eingriff zu stehen.

5. Gestell nach Anspruch 4, **dadurch gekennzeichnet, dass** die flexible Verbindung (51) geeignet ist, auf der anderen Seite mit einem oberen Sicherheitsgurt verankerungspunkt (12) in Eingriff zu stehen.

6. Gestell nach Anspruch 4 oder 5, **dadurch gekennzeichnet, dass** jeder Längsträger (33) Rückhaltemittel umfasst, mit denen die flexible Verbindung (51) in Eingriff stehen kann.

7. Gestell nach Anspruch 6, **dadurch gekennzeichnet, dass** die Rückhaltemittel für jeden Längsträger (33) eine Platte (44) umfassen, die am Längsträger (33) befestigt ist und außen am Längsträger (33) eine Umbiegung in der Form eines Hakens aufweist.

8. Gestell nach Anspruch 7, **dadurch gekennzeichnet, dass** jeder Längsträger (33) an der Außenseite einen Keil (47) umfasst, der geeignet ist, mit einer Seitenwand (3) der Fahrgastzelle (2) in Kontakt zu kommen, wobei die Platte (44) und der Keil (47) Mittel (48) zur gegenseitigen Befestigung umfassen.

9. Gestell nach Anspruch 2 oder 3, **dadurch gekennzeichnet, dass** die Haltemittel einen entfernbaren Fuß (52) umfassen, der geeignet ist, an einem der Längsträger (33) befestigt zu werden und sich auf dem Boden (4) der Fahrgastzelle (2) abzustützen.

10. Gestell nach einem der Ansprüche 2 bis 9, **dadurch gekennzeichnet, dass** es zwei Öffnungen (38) umfasst, die voneinander beabstandet im Sockel (32) positioniert sind.

11. Gestell nach einem der Ansprüche 1 bis 10, **dadurch gekennzeichnet, dass** die Haltemittel mindestens einen mit einem Längsträger (33) in Eingriff stehenden Puffer (91) umfassen, wobei der Sockel (32) und der Puffer (91) geeignet sind, auf dem Boden zu ruhen.

12. Gestell nach Anspruch 11, **dadurch gekennzeichnet, dass** die Haltemittel mindestens einen Arm (90) umfassen, der sich schräg von einem Längsträger (33) zum Querträger (34) erstreckt.

13. Gestell nach Anspruch 12, **dadurch gekennzeichnet, dass** es zwei der genannten Arme (90) umfasst.

14. Gestell nach Anspruch 13, **dadurch gekennzeichnet, dass** es Mittel (92) zur gemeinsamen Befestigung des Puffers (91) und des Arms (90) am Längsträger (33) umfasst.

15. Gestell nach einem der vorhergehenden Ansprüche, **dadurch gekennzeichnet, dass** die Schwenkmontagemittel zwei voneinander beabstandet auf dem Sockel (32) angeordnete Wellen (35) umfasst, die jeweils eine Hülse (46) aufnehmen, die zu einem jeweiligen Längsträger (33) gehört.

16. Gestell nach einem der vorhergehenden Ansprüche, **dadurch gekennzeichnet, dass** die Längsträger (33) jeweils eine Gleitschiene (43) umfassen, die der Gleitschiene (43) des anderen Längsträgers (33) gegenüberliegt.

17. Gestell nach Anspruch 16, **dadurch gekennzeichnet, dass** eine der Gleitschienen (43) einen Querträger (34) aufnimmt, der geeignet ist, zwischen den Längsträgern (33) angeordnet zu sein, wenn diese jeweils in der ausgefahrenen Längsposition sind.

18. Bett, **dadurch gekennzeichnet, dass** es ein Gestell (31) nach Anspruch 16 oder 17 und einen mehrere Latten (36) umfassenden Bettrost umfasst, wobei das Bett (30) einen Verstauzustand, in dem das Gestell (31) in seiner Verstauposition ist, während die Latten (36) auf dem Sockel (32) verstaut sind, und einen Gebrauchszustand einnehmen kann, in dem das Gestell (31) in seiner Gebrauchsposition ist, während die Latten (36) in den Gleitschienen (43) verteilt sind.

19. Bett nach Anspruch 18, **dadurch gekennzeichnet, dass** die Latten (36) im Gebrauchszustand des Betts (30) in einer Ebene liegend angeordnet sind, die von den Längsträgern (33) und dem Sockel (32) definiert wird, während die Latten (36) im Verstauzustand des Betts (30) gegeneinander hochgeklappt auf dem Sockel (32) angeordnet sind.

20. Bett nach Anspruch 18 oder 19, **dadurch gekennzeichnet, dass** es ferner eine Matratze (53) umfasst, die geeignet ist, auf den Latten (36) ausgebreitet zu werden, wenn das Gestell (31) in seiner Gebrauchsposition ist.

21. Verfahren zum Ausstatten eines Kraftfahrzeugs mit einem Bett, **dadurch gekennzeichnet, dass** es den Schritt des Beschaffens eines Betts (30) nach einem der Ansprüche 18 bis 20 und den Schritt des Anordnens des Sockels (32) auf vorbestimmten ersten Elementen (13) des Kraftwagens (1) umfasst, und wobei man
zum Überführen des Betts (30) aus dem Verstauzustand in den Gebrauchszustand
- jeden Längsträger (33) aus seiner eingezogenen Querposition in seine ausgefahrene Längsposition überführt,
- mittels der Haltemittel (51, 52) jeden Längsträger mit den vorbestimmten zweiten Elementen (12, 4) des Kraftwagens (1) verbindet,
- die Latten (36) in den Gleitschienen (43) der Längsträger (33) verteilt, und zum Überführen des Betts (30) aus dem Gebrauchszustand in den Verstauzustand
- die Latten (36) hochgeklappt auf dem Sockel (32) verstaut,
- die Längsträger (33) von den zweiten Elementen (12, 4) trennt und
- jeden Längsträger (33) aus seiner ausgefahrenen Längsposition in seine eingezogene Querposition überführt.

22. Verfahren nach Anspruch 21, **dadurch gekennzeichnet, dass** es den Schritt des Platzierens des Sockel (32) auf einer Hutablage (13) des Kraftwagens (1) umfasst, wobei die Hutablage (13) dann die ersten festliegenden Elemente bildet.

23. Verfahren nach Anspruch 21 oder 22, **dadurch gekennzeichnet, dass** es den Schritt des Umklappens der Sitze (6, 7), die der Kraftwagen (1) umfasst, umfasst, bevor jeder Längsträger (33) aus seiner Querposition in seine Längsposition überführt wird.

24. Verfahren nach einem der Ansprüche 21 bis 23, **dadurch gekennzeichnet, dass** es den Schritt des Ineingriffbringens einer flexiblen Verbindung (51) mit zu jedem Längsträger (33) gehörenden Rückhaltemitteln auf der einen Seite und mit einem Verankerungspunkt (12) der Fahrgastzelle (2) des Kraftwagens (1) auf der anderen Seite umfasst.

25. Verfahren nach einem der Ansprüche 21 bis 23, **dadurch gekennzeichnet, dass** es den Schritt des Ausbringens eines entfernbaren Fußes (52) an jedem Längsträger (33) umfasst, wobei sich der Fuß auf dem Boden der Fahrgastzelle (2) des Kraftwagens (1) abstützt.

26. Verfahren nach einem der Ansprüche 21 bis 25, **dadurch gekennzeichnet, dass** es den Schritt des Anordnens eines Querträgers (34) zwischen den Längsträgern (33), die jeweils in der ausgefahrenen Längsposition sind, gegenüber dem Sockel (32) umfasst.

27. Verfahren nach einem der Ansprüche 21 bis 26, **dadurch gekennzeichnet, dass** es den Schritt des Platzierens einer Matratze (53) durch die offenen Türöffnungen (14), die der Kraftwagen (1) umfasst, auf den Latten (36) umfasst.
